# EUROPEAN PATENT SPECIFICATION

(11) **EP 4 253 748 B1**
(45) Date of publication and mention of the grant of the patent: **25.06.2025**
(21) Application number: 22847109.0
(22) Date of filing: 20.01.2022
(51) Int. Cl.: F02M 25/00, F02D 19/08, F02B 37/18, F02B 43/10, F02B 69/04, F02D 19/06, F02D 41/00, F02D 41/04, F02M 21/02, F02M 67/14

(54) **DIESEL ENGINE**
DIESELMOTOR
MOTEUR DIESEL

(43) Date of publication of application: 04.10.2023
(73) Proprietor: JFE Engineering Corporation, Chiyoda-ku, Tokyo 100-0011 (JP)
(72) Inventor: SHIMIZU, Akira, Chiyoda-ku, Tokyo 1000011 (JP); KUWAHARA, Takaaki, Chiyoda-ku, Tokyo 1000011 (JP)
(74) Representative: Twelmeier Mommer & Partner
(86) International application number: PCT/JP2022/001944
(87) International publication number: WO 2023/139716

(56) References cited:
- WO-A1-2011/136151
- JP-A- 2002 004 917
- JP-A- 2004 027 861
- JP-A- 2020 148 198
- JP-A- 2020 148 198
- US-A1- 2010 229 838
- US-A1- 2011 259 290

## Description

### Technical Field

The present invention relates to a diesel engine, and more specifically to a diesel engine suitable for use as a diesel engine for ships that uses, as a main fuel, a fuel oil such as a heavy oil or a light oil, and especially effective for reducing carbon dioxide CO₂ (greenhouse effect gas) through the combustion of ammonia NH₃ which does not include carbon (C) (i.e., carbon-free), which has not been used as a fuel in conventional techniques.

### Background Art

When ammonia is combusted, ammonia generates no CO₂ because it is carbon-free. Thus, the combustion of ammonia in an internal combustion engine (a diesel engine, in particular) has been attempted. Ammonia, however, is flame-retardant because its ignition temperature is 651°C, which is higher compared, for example, to a heavy oil which have an ignition temperature of 250 to 380°C. Thus, the combustion rate of ammonia is low, and currently, 20% or more of the charged ammonia is emitted as unburned combustibles.

In order to solve such a problem, attempts to increase ammonia combustion efficiency have been made by reforming part of ammonia, for example, using a catalyst so as to produce hydrogen, charging the obtained hydrogen into a combustion chamber together with ammonia, and using the highly combustible hydrogen as an ignition source.

In Patent Literature 1, for example, in order to enable combustion of high-temperature hydrogen-rich ammonia and combustion air, a carbon-free power means is configured to produce a high-temperature hydrogen-rich gas by: feeding urea water as a raw material for hydrogen-rich ammonia; producing high-temperature ammonia from the urea water; and adding part of the ammonia to hydrogen andnitrogen. That is, Patent Literature 1 relates to a hydrogen-rich ammonia production reactor for producing a high-temperature hydrogen-rich gas by producing high-temperature ammonia from the urea water and adding part of the obtained ammonia to hydrogen and nitrogen.

In Patent Literature 2, ammonia is reformed to produce a reformed gas containing hydrogen, and the reformed gas, in addition to ammonia, is fed into a combustion chamber of an ammonia combustion internal combustion engine.

Further, Patent Literature 3 discloses a diesel engine that can suitably reduce CO₂ without mixing and burning hydrogen or the like by adjusting the ammonia concentration on the wall surface side from the center portion in combustion chamber inner space, and it is described that the amount of the ammonia is adjusted to a predetermined ratio, specifically, the amount of the fuel oil is set to 15% or more and 25% or less of the amount of the fuel oil supplied in heat ratio.

### Citation List

### Patent Literature

Patent Literature 1: Japanese Patent No. 5315493
Patent Literature 2: Japanese Patent No. 5310945
Patent Literature 3: Japanese Patent No. 6702475

### Summary of Invention

### Technical Problem

In recent years, decarbonization has been increasingly demanded, and diesel engines using a fuel having a higher ammonia ratio, for example, a mixture ratio of 50% or more of ammonia to the total fuel containing ammonia, or even as much as 80% of fuel, are expected.

However, this has challenges. For example, in the invention described in Patent Literature 3, it has been found that when the heat quantity ratio of ammonia (referred to as the ammonia mixing ratio in this case) is increased, unburned ammonia emission is increased, and when the ammonia mixing ratio is increased, the exhaust gas NOₓ value and unburned ammonia emission are changed in a trade-off relation, and therefore, there is a possibility that some conditioning is required in order to keep both low.

Such a condition setting is more difficult in the case of a diesel engine in which the ammonia mixing ratio can be variably set.

The present invention has been made to solve the above-described conventional problems. The present invention provides a diesel engine capable of suppressing both the exhaust gas NOₓ value and unburned ammonia to a low level and reducing CO₂, while allowing the ammonia mixing ratio to be adjustable over a wide range.

### Solution to Problem

To solve the above problems, according to a first aspect of the invention, there is provided a diesel engine including: a combustion chamber; a fuel charging means that charges a fuel oil serving as an ignition source and gaseous ammonia into the combustion chamber, wherein the fuel charging means forms an ammonia premixed gas in the combustion chamber by the fuel oil and the gaseous ammonia to be introduced into the combustion chamber and performs mixed combustion. The diesel engine has a setting means capable of setting a plurality of different ammonia mixing ratio values, and a control means for adjusting an air excess ratio value in a total sum of the fuel oil and the ammonia to be introduced by the charging means based on the ammonia mixing ratio value set by the setting means.

Accordingly, it is possible to reduce CO₂ by reducing unburned ammonia while suppressing the exhaust gas NOₓ value in a wide range of the ammonia-mixing ratios.

The ammonia mixing ratio value set by the setting means is set between 15% and 85% inclusive.

When the ammonia mixing ratio value set by the setting means is changed from a first value to a second value having an ammonia mixing ratio higher than the first value, the control means changes the first air excess ratio value adjusted corresponding to the first value to a second air excess ratio value smaller than the first air excess ratio value.

When the ammonia mixing ratio value set by the setting means is set to a value of 65% or more, the air excess ratio value is adjusted to 1.0 or less.

Control means adjusts the air excess ratio value to be 1.0 to 1.5 lower than the air excess ratio value during operation using only fuel oil when the ammonia-mixing ratio value set by the setting means is set to a value of 15% or more and 25% or less.

Preferably, in a second aspect, , the air excess ratio may be controlled by an adjusting an air volume by adjustment means provided in an exhaust-by-pass of a supercharger.

Preferably, in a third aspect, in any one of the first to second aspects, the charging of the ammonia may be performed by injecting the ammonia into an air supply port of the combustion chamber inlet-side.

Preferably, in a fourth aspect, in any one of the first to third aspects, the charging of the ammonia may be performed by direct injection of the ammonia into the combustion chamber.

Further, according to a fifth aspect of the present invention, in any of the first to fourth aspects of the present invention, a flow rate control means for controlling the flow rate of the fuel oil and the flow rate of the ammonia respectively based on the ammonia mixing ratio value set by the setting means, a flow rate calculation means for calculating or detecting the flow rate of the fuel oil and the flow rate of the ammonia adjusted by the flow rate control means, respectively, a mixing ratio calculation means for calculating the mixing ratio of ammonia from calculation result of the flow rate calculation means, an air excess rate output means for outputting an air excess rate value corresponding to either the ammonia mixing ratio value set by the setting means or the ammonia mixing ratio value obtained by calculating by the mixing ratio calculation means, a load factor detecting means for detecting a load factor, a table storage means having a plurality of tables for each air excess rate in which the load factor detected by the load detecting means and a supply pressure value corresponding to the load factor associated with each other, a supply air pressure determining means for determining a supply air pressure corresponding to the load factor detected by the load factor detecting means using a table selected from the table storage means based on the air excess rate value output from the air excess rate output means, and means for adjusting an air amount so as to be the supply air pressure determined by the supply air pressure determining means are provided.

Preferably, in a sixth aspect, in the fifth aspect, the table stored in the table storage means may be a curved line capable of determining the supply air pressure corresponding to an arbitrary load factor for each air excess ratio.

Preferably, in a seventh aspect, in the sixth aspect, the table stored in the table storage means may be a look-up table capable of determining the supply air pressure corresponding to a predetermined load factor for each air excess ratio.

### Brief Description of Drawings

Fig.1 is a comparing figure showing the state of the mixture when the ammonia mixture ratio is 20% and 80%
Fig.2 is a figure showing an example of data obtained as a result of experiments conducted by the inventor.
Fig. 3 is a diagram showing an example of the relationship between the ammonia-mixing ratio and the air excess ratio and unburned ammonia obtained from data in FIG. 2.
Fig.4 is a diagram showing the air-fuel mixture status when the ammonia mixture ratio is 20% and 80%, and when the air excess ratio differs.
Fig.5 is a cross-sectional view showing an overall configuration of a first embodiment of the present invention.
Fig.6 is an enlarged sectional view of the periphery of the engine combustion chamber of the first embodiment.
Fig.7A is an enlarged perspective view showing a configuration around a spacer for injecting the ammonia gas into the air supply port of the first embodiment.
Fig.7B is an enlarged perspective view also showing a spacer shape of the first embodiment.
Fig.7C is an enlarged perspective view also showing the configuration of gas valve of the first embodiment.
Fig. 8 shows an example of ammonia injection timing of the first embodiment.
Fig.9 is a flow chart showing the controlling procedure of the first embodiment.
Fig.10 is a explaining figure how to determine the supply air pressure from the air excess ratio and the load factor of the first embodiment.
Fig.11 is an enlarged perspective view showing an example of generation of a swirling flow in a second embodiment of the present invention.
Fig.12 is a cross-sectional view showing an overall configuration of a third embodiment of the present invention.
Fig.13 is a sectional view showing the periphery of the engine combustion chamber of a fourth embodiment of the present invention.
Fig.14A is a perspective view of the ammonia supply system of the fourth embodiment, viewed obliquely from above.
Fig.14B is a perspective view of the ammonia supply system of the fourth embodiment, viewed obliquely from below.
Fig.15 is a plan view showing ammonia injection holes layout in the fourth embodiment.

### Description of Embodiments

Embodiments of the present invention will be described below in detail with reference to the drawings. Note that the present invention is not limited by the description of the following embodiments and examples. Moreover, the structural features of the embodiments and examples to be described below shall include those readily envisaged by a person skilled in the art, substantially the same structural features, and those falling within what is called an equivalent range. Furthermore, elements to be disclosed in the following embodiments and examples may be combined with one another as appropriate, or may be selected for use as appropriate.

In a diesel engines using a fuel containing ammonia, ammonia-air mixture needs to be concentrated as much as possible at the high-temperature section where oil is burned as an ignition source in order to minimize unburned ammonia emissions. In this regard, according to the invention described in Patent Literature 3, ammonia is concentrated in the vicinity of combustion chamber wall surface serving as the high-temperature portion.

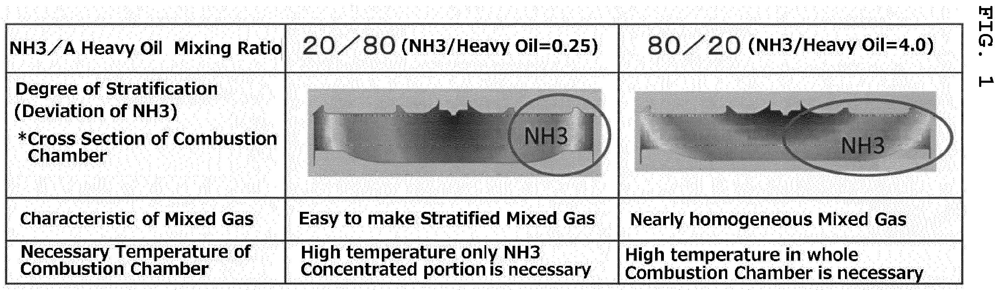

However, in such methods, it is difficult to suppress the emission of unburned ammonia when the ammonia-mixing ratio is further increased. This is because, as shown in FIG. 1, as the ammonia mixing ratio increases, ammonia distribution changes. The left side of FIG. 1 shows the ammonia distribution when the ammonia mixing ratio is 20%. In this case, the high-temperature portion is concentrated in the vicinity of the wall surface, and the ammonia can be concentrated in a layer form of +70% in the vicinity of the wall surface, whereby the emission of unburned ammonia can be suppressed.

However, as shown on the right side of FIG. 1, the mixing ratio of ammonia is higher, and in this case, the mixing ratio of ammonia is 80%, degree of stratification of ammonia is decreased due to the increase in the ratio, and the mixture is close to a homogeneous mixture.

This means that the rate of concentration of ammonia on the wall surface, which is a hot part, is reduced, resulting in a large amount of unburned ammonia remaining.

In other words, when using a fuel containing ammonia in which degree of stratification is reduced by increasing the ammonia mixing ratio, not only the wall portion of combustion chamber but also the whole combustion chamber must be heated, i.e., the temperature of the mixture of ammonia and air must be adjusted to an appropriate air excess ratio in order to keep the temperature at a temperature effective for promoting thermal decomposition (about 1500° C. to about 2000° C.) while the fuel oil serving as the ignition source is burned normally.

In this invention, an air excess ratio that matches the ammonia-mixing ratio of such fuel was verified from the examples. Examples and Comparative Example are described below.

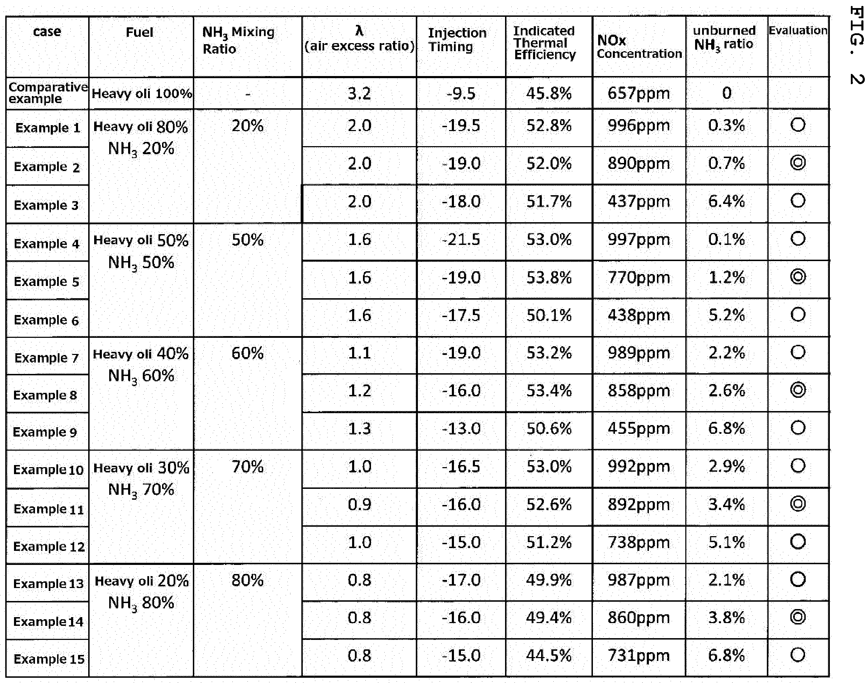

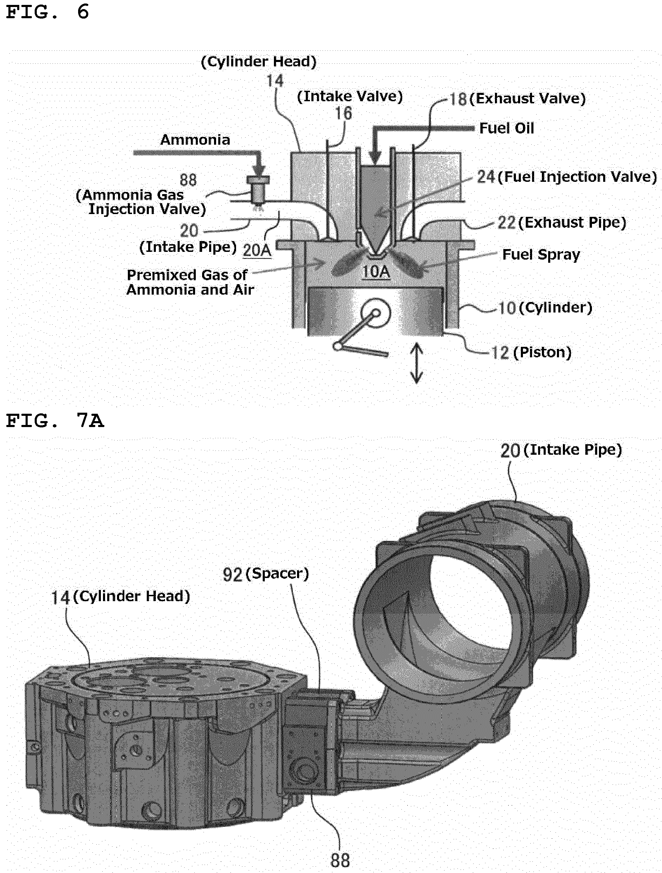

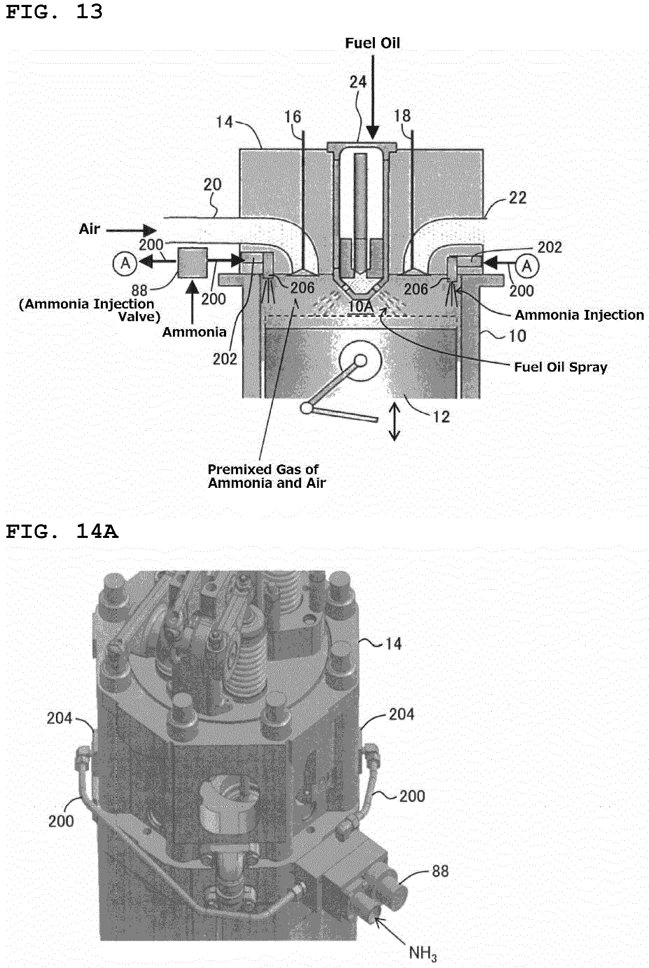

Incidentally, the diesel engines of the Examples and Comparative Examples are either a type in which ammonia is injected into the air supply port as shown in FIG. 6, or a type in which ammonia is directly injected into the engine combustion chamber as shown in FIG. 13. The ratio of unburned ammonia to the charged ammonia when the ammonia mixing ratio is changed under the following equipment conditions was simulated and evaluated as shown in FIG. 2.

Air supply and exhaust system and combustion chamber of a 4-stroke engine with cylinder diameter 400mm, stroke 500mm, stroke volume 62.8L, compression ratio 14.5, rotational speed 600rpm were modeled and analyzed.

In the simulations, parameters such as the ammonia mixing ratio, the air excess ratio, ammonia charging timing, duration, charging position, oil-fuel injection quantity, injection timing, injection pressure, and degree of stratification of ammonia and air premixed gas were changed, and the output was calculated as indicated thermal efficiency, unburned NH₃, NOx, CO, THC, PM, Pmax (maximum combustion pressure), and the like.

The evaluation criteria for the calculated value for NOx concentration is set 900ppm and below based on NOx's IMO Ocean NOx Regulatory TierII Level. For the unburned ammonia ratio is set to "Energy Carrier" in the Strategic Innovation Creation Program (SIP), which is a national project of the Cabinet Office, and the target value of 5% or less in the R&D theme "Direct Ammonia Burning" is set to ⊚ (excellent), NOx concentration of 1000ppm or less, and the unburned ammonia ratio of 7% or less is set to ○ (good), and those that are less than this are set to × (bad).

As for CO₂, since ammonia is carbon-free and does not contain carbon (C) when it is used as a fuel, it is possible to reduce CO₂ corresponding to the mixing ratio with heavy oil. Therefore, the evaluation-value calculation here is omitted. This is because, when ammonia is mixed with heavy oil at a heat quantity ratio of 80%, CO₂ is reduced by 80%, and the higher the ammonia mixing ratio, the more effectively CO₂ is reduced.

### Reference Examples, Examples 1 to 15

### (Reference Example)

Under the above equipment conditions, the fuel was 100% heavy oil, i.e., a fuel that does not mix ammonia. The supply air pressure was set so that the injection timing of the fuel oil was-9.5 with respect to the top dead center TDC and the air excess ratio was 3.2, and NOx concentration and the unburned ammonia ratio at that time were calculated. The results are shown in the table of FIG. 2.

### (Examples 1 to 3)

Under the same apparatus conditions as in the above Reference Example, fuels prepared with 80% of heavy oil and 20% of ammonia at a mixing ratio of 20% of ammonia calorie were injected into the air supply ports shown in FIG.6 in Examples 1 and 3, and were injected directly into combustion chamber shown in FIG. 13 in Example 2, respectively. The injection timing of the fuel-oil in the respective examples was -19.5 in Example 1:,-19.0 in Example 2:, and -18.0 in Example 3 with respect to the top dead center TDC, and the supply air pressure was set so that the air excess ratio was 2.0, and the NOx concentration and the unburned ammonia ratio were calculated in the same manner as in the Reference Example. The results were as shown in Examples 1 to 3 of FIG. 2.

### (Examples 4 to 6)

Under the same apparatus conditions as in the above Reference Example, the fuel prepared with 50% of heavy oil and 50% of ammonia as the fuel and 50% of the ammonia heat quantity mixing ratio was injected into the air supply port shown in FIG. 6 in all of Examples 4 to 6. The injection timing of the fuel-oil in the respective examples was -21.5 in Example 4:,-19.0 in Example 5, and -17.5 in Example 6 with respect to the top dead center TDC, and the supply air pressure was set so that the air excess ratio was 1.6 lower than in Examples 1 to 3, and the NOx concentration and the unburned ammonia ratio were calculated in the same manner as in the Reference Example. The results were as shown in Examples 4 to 6 of FIG. 2.

### (Examples 7 to 9)

Under the same apparatus conditions as in the above Reference Example, the fuel prepared with 40% of heavy oil and 60% of ammonia as the fuel and 60% of the ammonia heat quantity mixing ratio was injected into the air supply port shown in FIG. 6 in the same manner as in Examples 4 to 6 described above. The injection timing of the fuel-oil in the respective examples was -19.0 in Example 7:, -16.0 in Example 8:, and -13.0 in Example 9 with respect to the top dead center TDC respectively, and the air excess ratio was lowered from Examples 4 to 6 to set the supply air pressure so as to become Examples 7: 1.1, Example 8: 1.2, and Example 9: 1.3, and the NOx concentration and the unburned ammonia ratio were calculated in the same manner as in the Reference Example. The results were as shown in Examples 7 to 9 of FIG. 2.

### (Examples 10 to 12)

Under the same apparatus conditions as in the above Reference Example, the fuel was 30% of heavy oil and 70% of ammonia, and the fuel prepared at the ammonia heat quantity mixing ratio of 70% was injected into the air supply port shown in FIG. 6 in the same manner as in Examples 4 to 6 described above. The injection timing of the fuel-oil of each example was -16.5 in Example 10, -16.0 in Example 11:, and -15.0 in Example 12 with respect to the top dead center TDC respectively, and the air excess ratio was further lowered from Examples 7 to 9 to set the supply air pressure to be Example 10: 1.0, Example 11: 0.9, and Example 12: 1.0, and the NOx concentration and the unburned ammonia ratio were calculated in the same manner. The results were as shown in Examples 10 to 12 of FIG. 2.

### (Examples 13 to 15)

Under the same apparatus conditions as in the above Reference Example, the fuel prepared with 20% of heavy oil and 80% of ammonia as the fuel and 80% of the ammonia heat quantity mixing ratio was injected into the air supply port shown in FIG. 6 in the same manner as in Examples 4 to 6 described above. The injection timing of the fuel-oil in the respective examples was -17.0 in Example 13:, -16.0 in Example 14:, and -15.0 in Example 15 with respect to the top dead center TDC respectively, and the air excess ratio was further lowered from Examples 10 to 12, so that all of Examples 13 to 15 were set to 0.8, and the NOx concentration and the unburned ammonia ratio were calculated in the same manner. The results were as shown in Examples 10 to 12 of FIG. 2.

Incidentally, even when the heat quantity mixing ratio of ammonia is changed to 20% and 50% as the fuel containing ammonia as in Examples 1 to 6 above, when the air excess ratio is fixed at 2.0, the unburned NH₃ is 0.7% and NOx is 890ppm at the ammonia mixing ratio of 20%, whereas the unburned NH₃ is significantly lower than the above evaluation criteria as 23% at the ammonia mixing ratio of 50%, so that the engine cannot be operated even if NOx can be reduced to a 350ppm level.

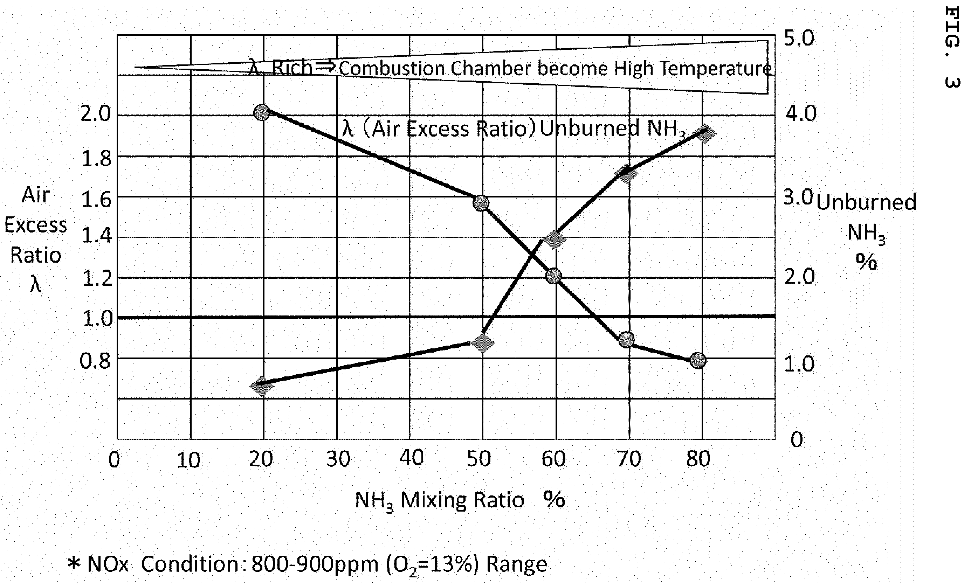

FIG. 3 shows an optimum condition of the air excess ratio λ with respect to the mixing ratio of ammonia and fuel oil for the purpose of setting NOₓ value to 900ppm or less based on FIG. 2 obtained in accordance with Examples 1 to 15 simulated by the inventors. The vertical axis of FIG. 3 shows the air excess ratio λ, and the horizontal axis shows the mixing ratio of the ammonia in calorie.

According to this, as shown in FIG. 3, it is desirable that the air excess ratio is gradually lowered so that the combustion field is brought to a high temperature in a category where the fuel-oil normally burns up to about 50% of the ammonia mixing ratio.

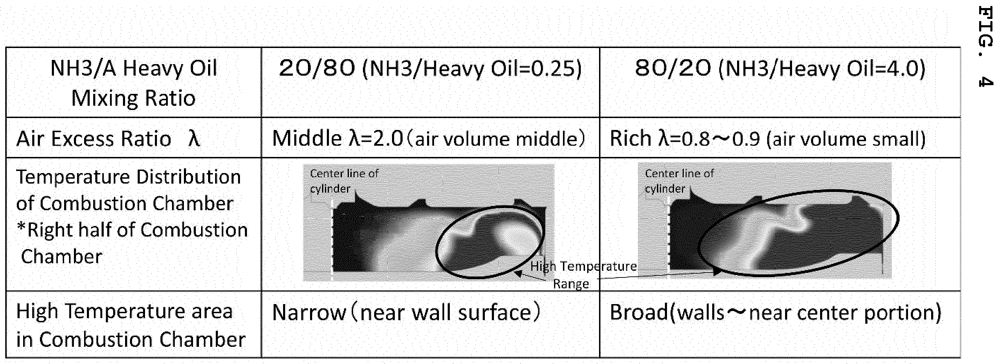

However, in order to obtain a combustion rate with the ammonia mixing ratio of 95% or more from a range exceeding 50%, it is necessary to place the mixture of ammonia and air in a high-temperature environment of 1500° C to 2000° C in order to prioritize the thermal decomposition reaction of ammonia. When the ammonia mixing ratio is 65% or more, it was found that, as shown in Fig. 4, the air excess ratio should be set at an excessive concentration of, for example, 1.0 or less, and combustion chamber temperature due to ignition of the fuel oil and subsequent combustion of the fuel oil and ammonia should be set at a high temperature.

This is thought that even if all ammonia does not follow the following equation in which all ammonia is completely burned,

4NH₃+3O₂=2N₂+6H₂O

and if the intermediate product remains in an elementary reaction formula, the energy can be extracted by the exothermic reaction. And even if the ammonia does not completely react as in the previous formula, it decomposes in the pyrolysis reaction and does not remain as ammonia, and does not become the unburned ammonia. That is, the mixing ratio of ammonia and fuel oil is made variable, and control is performed so as to achieve the optimum air excess ratio for the ratio. In order to suppress unburned ammonia, it is necessary to decrease the air excess ratio with increasing the ammonia mixing ratio. In particular, when the ammonia mixing ratio is 65% or more, it is necessary to reduce the air excess ratio to 1.0, which is usually required to completely burn the fuel oil, or less, i.e., to reduce air excess ratio to 1.0 or less in order to prioritize the promotion of the thermal decomposition of ammonia.

It should be noted that this is considered to be slightly different depending on combustion chamber profile and flow conditions. For example, it is desirable to have a range of about ±5% in the ammonia-mixing ratio in this curve relation, and it is preferable to control the air excess ratio along this curve in order to obtain a combustion rate of 95% or more.

As a control method, the air excess ratio can be controlled by monitoring residual O₂ concentration in the exhaust gas in the conventional combustion. But in the combustion method of the present invention, the residual O₂ concentration in the exhaust gas is not theoretically obtained, because ammonia is left in the intermediate product of the thermal decomposition. For example, in the case of burning at the air excess ratio 0.8, residual O₂ is also present.

The required air amount is determined as the supply air pressure value, and can be adjusted to the required supply air pressure by controlling the exhaust bypass amount of the supercharger, for example.

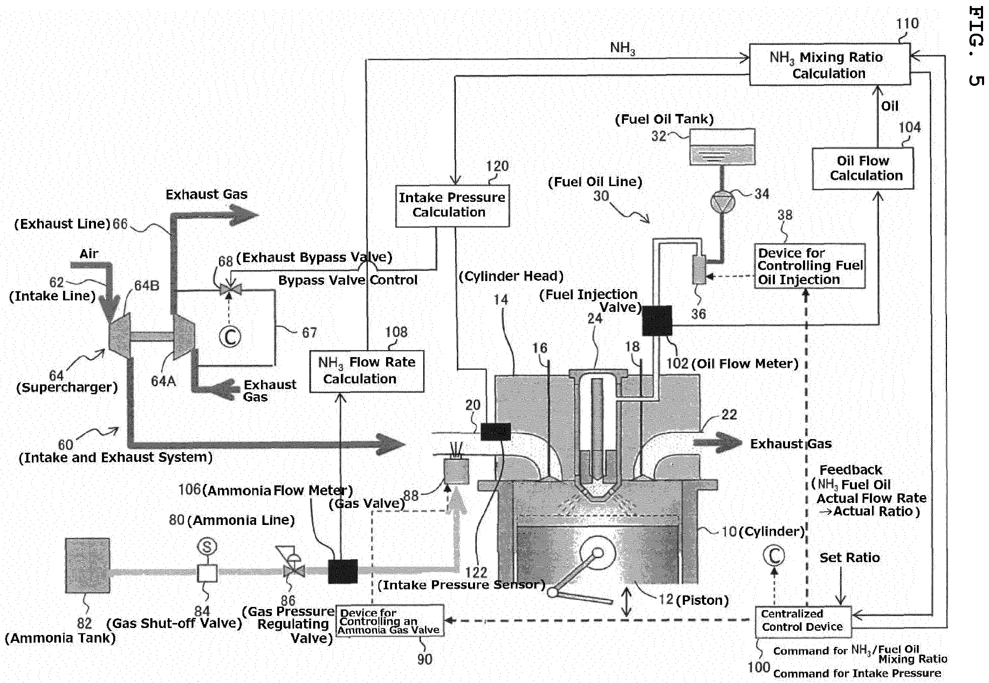

As shown in Fig.5, the diesel engine to which the present invention is directed, mainly includes a cylinder 10, a piston 12 which moves up and down in the cylinder 10, a cylinder head 14 mounted on the upper part of the cylinder 10, an air supply valve 16 mounted on the cylinder head 14 for supplying air to an engine combustion chamber 10A above the piston 12, an exhaust valve 18 for discharging exhaust gas after combustion from the engine combustion chamber 10A, an air supply pipe 20 for supplying air to the cylinder head 14, an exhaust pipe 22 for discharging the exhaust gas from the cylinder head 14, a fuel injection valve 24 for injecting fuel oil into the engine combustion chamber 10A, a fuel oil tank 32, a fuel supply pump 34 and a solenoid valve 36 constituting a fuel oil line 30 for supplying fuel oil to the fuel injection valve 24, a fuel oil injection control device 38 for opening and closing the solenoid valve 36, an air supply and exhaust system 60 for supplying air to the air supply pipe 20 and discharging the exhaust gas from the exhaust pipe 22, constituted by an air supply line 62, a supercharger 64 having an supply air turbine 64B for compressing the air supplied to the air supply line 62 by an exhaust gas turbine 64A rotated by the exhaust gas, and an exhaust bypass valve 68 for controlling an exhaust gas supplied from the exhaust pipe 22 to the exhaust gas turbine 64A of the supercharger 64 through a bypass line 67.

The diesel engine is further provided with an ammonia line 80 for burning ammonia. The ammonia line 80 includes an ammonia tank 82, an ammonia gas shut-off valve 84, an ammonia gas pressure regulating valve 86, an ammonia gas injection valve (hereinafter, also simply referred to as gas valve) 88 for injecting ammonia gas into an air supply port 20A in the air supply pipe 20, and a device 90 for controlling ammonia gas valve.

The device 38 for controlling fuel oil injection of the fuel-oil line 30, the exhaust bypass valve 68 of the air supply and exhaust system 60, and the device 90 for controlling ammonia gas valve of the ammonia line 80 are controlled by the centralized control device 100.

Here, the device 38 for controlling fuel oil injection, the device 90 for controlling ammonia gas valve, the exhaust bypass valve 68, and the centralized control device 100 constitute a control means.

In the first embodiment of the present invention shown in FIG. 5, as shown in FIG. 6 in detail, in a diesel engine with fuel injection system of mechanical type or electronic control type, the gas valve 88 sprays ammonia from the ammonia gas injection valve 88, which is a gas valve, to the air supply port 20A in the air supply pipe 20, and mixes the ammonia with the engine supply air to produce a premixed gas of ammonia and air (also simply referred to as premixed gas), and mixes and combusts fuel oil, such as heavy oil or light oil, which are main fuels injected from the fuel injection valve 24, as an ignition source.

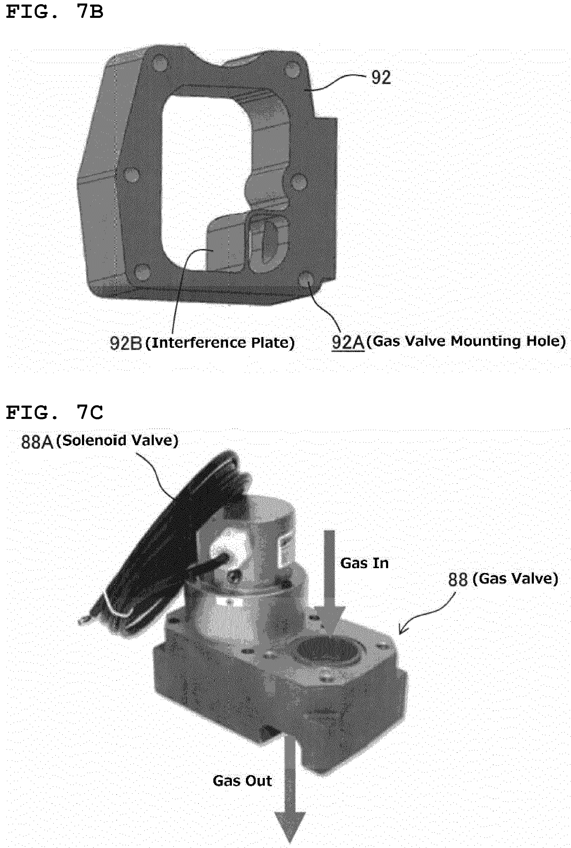

As shown in FIG. 7A, a spacer 92 for attaching the gas valve 88 is provided between the air supply pipe 20 and the cylinder head 14. As shown in FIG. 7B, the spacer 92 is provided with a gas valve mounting hole 92A and an interference plate 92B for preventing ammonia injected from the gas valve 88 from being injected directly into the air supply port 20A. In a conventional diesel engine, a mixture of ammonia and air remaining in an air supply port can be added together with unburned NH₃ in the combustion chamber in an exhaust stroke. But in this embodiment, NH₃ is not left in the air supply port as much as possible because the interference plate 92B is provided in a mechanism for supplying NH₃ from the gas valve to the air supply port. As a result, the unburned NH₃ is generally limited to those generated in the burning stroke.

As shown in FIG. 7C, the gas valve 88 is opened and closed by the solenoid valve 88A.

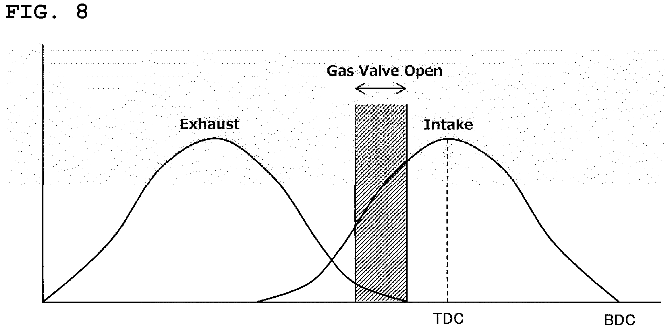

The ammonia is stored in a liquid form in the ammonia tank 82, and is vaporized and supplied in a gaseous form. Gas pressure is adjusted by the gas pressure regulating valve 86, the flow rate is adjusted by the gas valve 88, and the ammonia is supplied to the engine within the valve opening period adjusted by the predetermined air supply timing illustrated in FIG. 8.

In this embodiment, an oil flowmeter 102 disposed in the middle of the fuel oil line 30, an oil flow rate calculator 104 for calculating a fuel oil flow rate based on an output of the oil flow meter 102, an ammonia flow meter 106 disposed in the middle of the ammonia line 80, an ammonia flow rate calculator 108 for calculating an ammonia flow rate based on an output of the ammonia flow meter 106, an ammonia mixing ratio calculator 110 for calculating the ammonia mixing ratio from the fuel oil flow rate calculated by the oil flow rate calculator 104 and the ammonia flow rate calculated by the ammonia flow rate calculator 108, and an supply air pressure calculator 120 for controlling the exhaust bypass valve 68 by calculating necessary supply air pressure based on an output of the ammonia mixing ratio calculator 110, and a supply air pressure detected by a supply air pressure sensor 122 arranged in the middle of the air supply pipe 20 becomes a target value, are provided.

The centralized control device 100 compares the preset set ratio value of the ammonia mixing ratio with the calculated ratio value of the ammonia mixing ratio calculator 110, and feedbackcontrols the fuel-oil flow rate and/or the ammonia flow rate by the device 38 for controlling fuel oil injection and the device 90 for controlling an ammonia gas valve if the calculated ratio value is outside the predetermined range so that the actual ratio (referred to as the actual ratio) falls within the predetermined range of the set ratio.

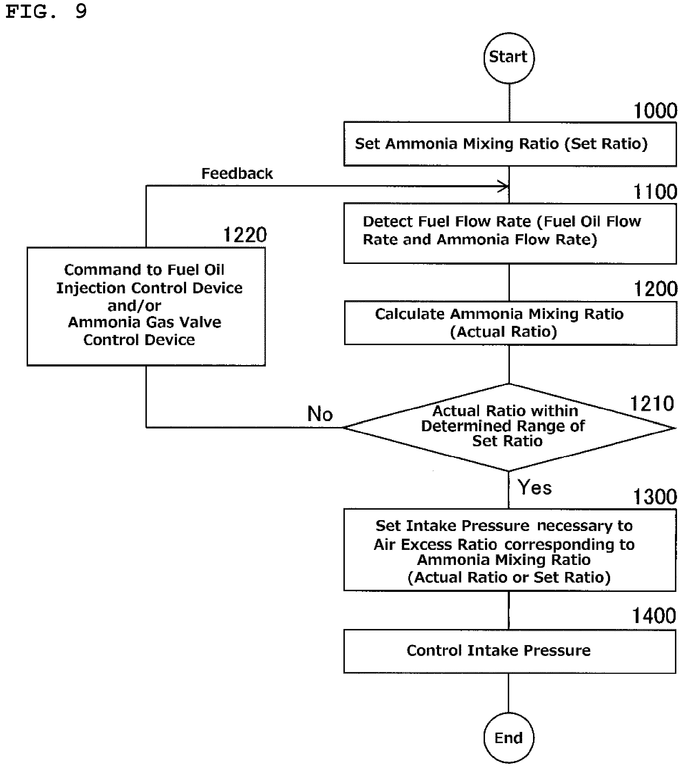

Hereinafter, the control procedure will be described with reference to FIG. 9.

First, in step 1000, the target value (set ratio) of the ammonia mixing ratio is set in the centralized control device 100, the fuel oil flow rate and the ammonia flow rate corresponding to the set ratio are calculated, and the engine loads are detected, and gas valve 88 and the fuel injection valve 24 are controlled. The ammonia mixing ratio to be set is configured to be changeable.

Next, in step 1100, a fuel flow rate, i.e., a flow rate of the fuel oil and the ammonia, is detected. Here, the flow rate of the fuel oil is detected from the output of the oil flow meter 102, and the flow rate of the ammonia is detected from the output of the ammonia flow meter 106.

From the flow rates of fuel oil and ammonia detected in step 1100, the ammonia mixing ratio is calculated in step 1200.

In step 1210, the actual value (actual ratio) of the ammonia mixing ratio value obtained by the calculation instep 1200 is compared with the ammonia mixing ratio value (set ratio) set in the first setting in step 1000, and if it is within a predetermined range, the calculated actual ratio is used in step 1300. On the other hand, if there is a difference exceeding the predetermined range, the feedback control is performed so that the fuel oil flow rate and the ammonia flow rate fall within the predetermined range again in step 1220. For example, adjustment is performed so that the detected fuel oil flow rate and ammonia flow rate become the ammonia mixing ratio of the set ammonia 70% and fuel oil 30%. When it is determined in step 1210 that the fuel oil flow rate and the ammonia flow rate are within the predetermined range, further adjustment of the fuel oil flow rate and the ammonia flow rate is unnecessary, and therefore the ammonia mixing ratio value (setting ratio) set first may be used. But since the actual calculation value (actual ratio) is considered to be more accurate, the calculation ratio value (actual ratio) is more preferable.

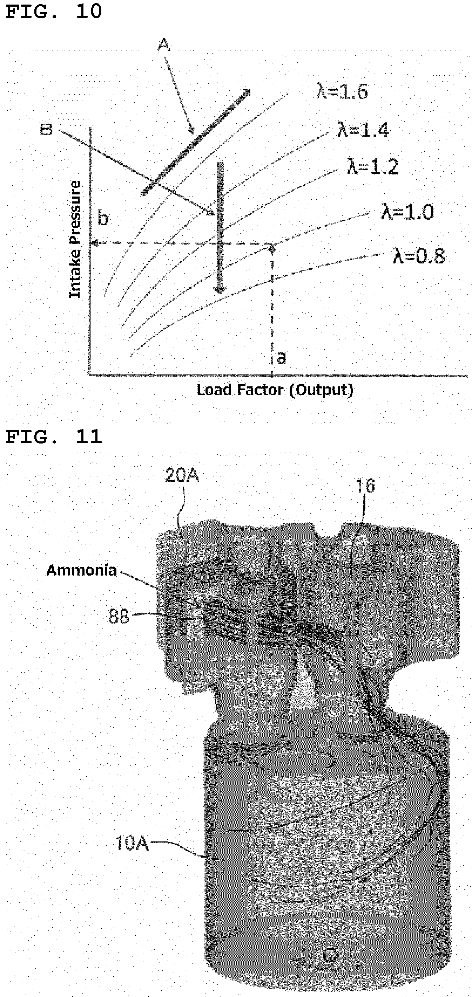

Then, the process proceeds to step 1300, and the supply air pressure required for the air excess ratio λ corresponding to the ammonia-mixing ratio (actual ratio or setting ratio) at that time, which is calculated in step 1200 or set in step 1000, is set according to the load factor at that time, using the relation as shown in FIG. 10. For example, when the loading factor is "a" and the air excess ratio λ is 1.0, the required supply air pressure is "b". As indicated by an arrow A in the drawing, when the same air excess ratio λ is taken as the load factor increases, the required supply air pressure increases. On the other hand, as the air volume decreases and the air excess ratio λ decreases, the required supply air pressure decreases as indicated by an arrow B in the drawing. The data as shown in FIG. 10 necessary for the control can be stored in advance as a table in the supply air pressure calculator 120. Here, the table stored may be a table that stores a curve data capable of determining the supply air pressure corresponding to an arbitrary load factor for each air excess ratio, or may be a table in which a numerical value capable of determining the supply air pressure corresponding to a predetermined load factor for each air excess ratio is stored in a LUT (look-up table). For the former, since it is curvilinear data, it is preferable to determine the corresponding air excess ratio for any load factor, and the latter is preferable to determine the corresponding air excess ratio for a certain determined discrete load factor while saving the storage capacity of the storage means.

Then, the process proceeds to step 1400, where the opening degree of the exhaust bypass valve 68 is controlled to adjust the supply air pressure detected by the supply air pressure sensor 122 to a set value.

The governing of the final setting output and the rotation speed maintenance is performed by adjusting the fuel oil flow rate when the ammonia mixing ratio is low and by adjusting the ammonia flow rate when the ammonia mixing ratio is high, and the final governing by which fuel can be arbitrarily set.

In the first embodiment, the ammonia gas is injected from a direction perpendicular to the air supply pipe 20. But as in the second embodiment shown in FIG. 11, the ammonia gas may be injected from a direction parallel to the air supply pipe 20 when the ammonia gas is injected into the air supply port 20A, so that the generation of the swirling flow C is enhanced in the engine combustion chamber 10A, so that the residual ammonia in the air supply port 20A can be reduced.

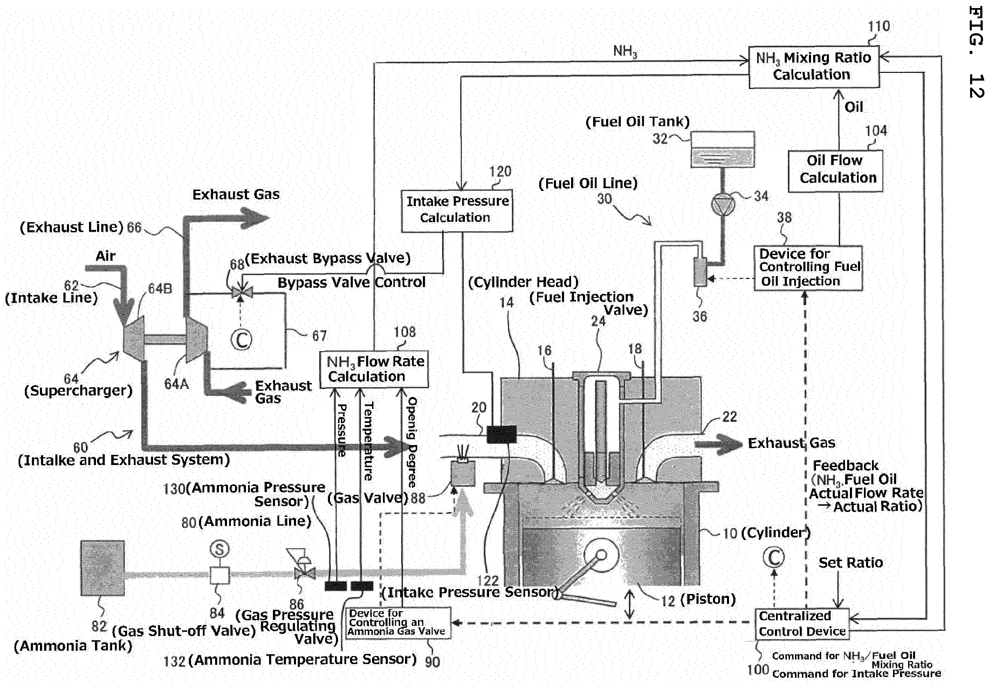

Further, in the first embodiment, the flow rate of the fuel oil and ammonia was directly detected using the oil flow meter 102 and the ammonia flow meter 106, respectively. But as in the third embodiment shown in FIG. 12, the fuel flow rate calculation means 104 may calculate the fuel oil flow rate by integrating a fuel injection signal of the output of device 38 for controlling fuel oil injection. Or, the ammonia flow rate calculation means 108 may calculate the ammonia flow rate from output of the ammonia pressure sensor 130 for detecting the pressure of the ammonia and the ammonia temperature sensor 132 provided in the ammonia line 80, and the opening degree of gas valve 88 inputted from device 90 for controlling an ammonia gas valve.

According to the third embodiment, the fuel oil flow rate and the ammonia flow rate can be calculated without providing a flow meter. It is also possible to provide the same flow meter 102 or 106 as in the first embodiment on either line so as to directly detect the flow rate of one.

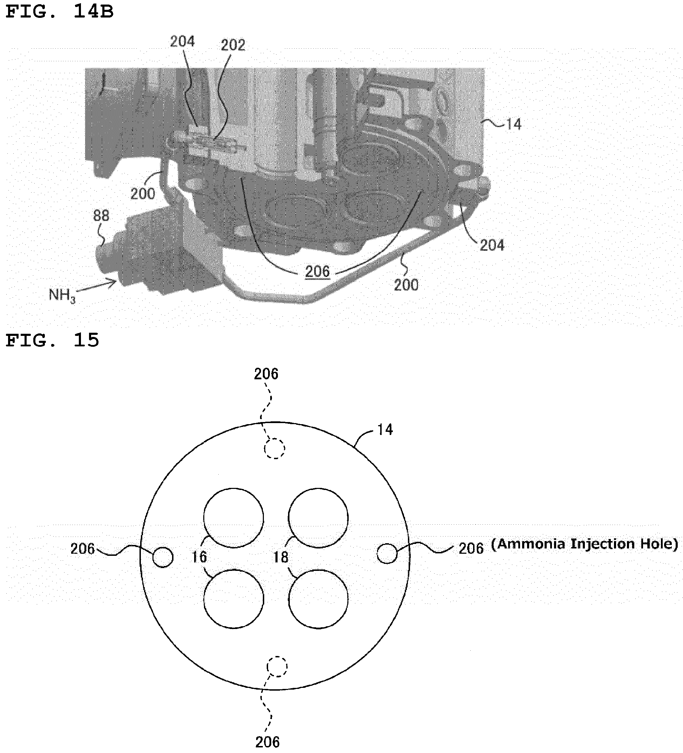

In the above embodiment, the ammonia gas is supplied to the air supply port 20A. But the method of supplying the ammonia gas to the engine combustion chamber 10A is not limited thereto. As in the fourth embodiment shown in FIG. 13, which is the same as that in the Patent Literature 3, the ammonia gas vaporized from ammonia injection hole 206 formed at a plurality of positions (two positions shown in FIG. 15 in the embodiment) on the inner wall surface side of the engine combustion chamber 10A may be directly supplied into the engine combustion chamber 10A by providing a pipe 200, a check valve 202, and a connector 204 at output side of the ammonia line 80 as shown in FIG. 14A and 14B.

The gas valve 88 of the present embodiment is provided in the respective cylinder 10, and the ammonia controlled by the gas valve 88 is distributed by the pipe 200 shown in FIG. 14A and 14B, and is sent to the plurality of the injection hole 206 through the connector 204. The check valve 202 is provided in the connector 204 so that combustion gases do not flow backward during combustion.

In the above embodiment, the present invention is applied to a marine diesel engine using heavy oil as a fuel, but the application of the present invention is not limited thereto, and can be similarly applied to a diesel engine using light oil as a fuel, an engine that combine compression ignition such as a diesel engine with spark ignition such as a gasoline engine. The configurations of the fuel-oil-line, ammonia line, and the air supply and exhaust system are not limited to the embodiments.

### Industrial Applicability

The present invention is especially effective when used as an engine for an ammonia tanker for transporting ammonia, but the application target thereof is not limited thereto. Reference Signs List

10... cylinder
10A... engine combustion chamber
12... piston
14... cylinder head
16... air supply valve
18... exhaust valve
20... air supply pipe
20A... air supply port
22... exhaust pipe
24... combustion injection valve
30... fuel oil line
32... fuel oil tank
34... fuel feed pump
36... solenoid valve
38... device for controlling fuel oil injection
60... air supply and exhaust system
62... air supply line
64... supercharger
64 A... exhaust gas turbine
64B... supply air turbines
66... exhaust line
68... exhaust bypass valve
80... ammonia line
82... ammonia tank
84... gas shut-off valve
86... gas pressure regulating valve
88... gas valve (ammonia injection valve)
90... device for controlling an ammonia gas valve
100... centralized control device
102... oil flow meters
104... oil flow calculator
106... ammonia flowmeter
108... ammonia flow calculator
110... ammonia mixing ratio calculator
120... supply air pressure calculator
122... supply air pressure sensor
130... ammonia pressure sensor
132... ammonia temperature sensor

## Claims

1. A diesel engine including: a combustion chamber (10A) ; a fuel charging means for charging a fuel oil serving as an ignition source, and gaseous ammonia into the combustion chamber (10A), wherein the fuel charging means forms an ammonia premixed gas in the combustion chamber (10A) by the fuel oil and gaseous ammonia introduced into the combustion chamber and perform mixed combustion,
further including a setting means capable of setting a plurality of different ammonia mixing ratio values, and
a control means for adjusting an air excess ratio value in a total sum of the fuel oil and the ammonia to be introduced by the charging means based on the ammonia mixing ratio value set by the setting means,
wherein the ammonia mixing ratio value set by the setting means is set between 15% and 85% inclusive,
wherein when the ammonia mixing ratio value set by the setting means is changed from a first value to a second value having an ammonia mixing ratio higher than the first value, the control means changes the first air excess ratio value adjusted corresponding to the first value to a second air excess ratio value smaller than the first air excess ratio value,
wherein when the ammonia mixing ratio value set by the setting means is set to a value of 65% or more, the air excess ratio value is adjusted to 1.0 or less,
wherein when the ammonia mixing ratio value set by the setting means is set to a value of 15% or more and 25% or less, the control means adjusts the air excess ratio value to be 1.0 to 1.5 lower than the air excess ratio value during operation using only fuel oil, and wherein a required air amount is determined as a supply air pressure.

2. The diesel engine according to claim 1, wherein the air excess ratio is controlled by adjusting an air volume by adjustment means provided in an exhaust-by-pass of a supercharger (64).

3. The diesel engine according to any one of claims 1 or 2, wherein the charging of the ammonia is performed by injecting the ammonia into an air supply port (20A) of the combustion chamber inlet-side.

4. The diesel engine according to any one of claims 1 or 2, wherein the charging of the ammonia is performed by direct injection of the ammonia into the combustion chamber (10A).

5. The diesel engine according to any one of claims 1 to 4, **characterized in that** it includes:
a flow rate control means for controlling the flow rate of the fuel oil and the flow rate of the ammonia, respectively, based on the ammonia mixing ratio set by the setting means.
a flow rate calculation means for calculating or detecting the flow rate of the fuel oil and the flow rate of ammonia adjusted by the flow rate control means, respectively,
a mixing ratio calculation means for calculating the mixing ratio of ammonia from the calculation result of the flow rate calculation means,
an air excess ratio outputting means for outputting the air excess ratio value corresponding to either the ammonia mixing ratio value set by the setting means or the ammonia mixing ratio value obtained by calculating the mixing ratio calculation means,
a load factor detecting means for detecting a load factor
a table storage means having a plurality of tables for each air excess ratio associating the load factor detected by the load detecting means and a supply air pressure value corresponding to the load factor,
an supply air pressure determining means for determining an supply air pressure corresponding to the load factor detected by the load factor detecting means using a table selected from the table storage means based on the air excess ratio value output from the air excess ratio outputting means; and
a means for adjusting an amount of air so as to be the supply air pressure determined by the supply air pressure determining means,

6. The diesel engine according to claim 5, wherein the table stored in the table storage means is a curved line capable of determining a supply air pressure corresponding to an arbitrary load factor for each air excess ratio.

7. The diesel engine according to claim 5, wherein the table stored in the table storage means is a look-up table capable of determining the supply air pressure corresponding to a predetermined load factor for each air excess ratio.

## Patentansprüche

1. Dieselmotor mit: einer Brennkammer (10A); einer Kraftstoffladeeinrichtung zum Laden eines als Zündquelle dienenden Brennstofföls und gasförmigem Ammoniak in die Brennkammer (10A), wobei die Kraftstoffladeeinrichtung in der Brennkammer (10A) mit dem in die Brennkammer eingebrachten Brennstofföl und gasförmigem Ammoniak ein Ammoniak-Vormischgas bildet und eine Mischverbrennung durchführt,
zudem mit einer Einstelleinrichtung, mit der eine Vielzahl unterschiedlicher Ammoniak-Mischungsverhältnisse eingestellt werden kann, und
einer Steuereinrichtung zum Anpassen eines Wertes für das Luftüberschussverhältnis in einer Gesamtsumme des Brennstofföls und des Ammoniaks, die durch die Ladeeinrichtung eingeführt werden soll, auf der Grundlage des durch die Einstelleinrichtung eingestellten Wertes für das Ammoniak-Mischungsverhältnis,
wobei der durch die Einstelleinrichtung eingestellte Wert für das Ammoniak-Mischungsverhältnis zwischen 15 % und 85 % einschließlich eingestellt wird,
wobei, wenn der durch die Einstelleinrichtung eingestellte Wert des Ammoniak-Mischungsverhältnisses von einem ersten Wert auf einen zweiten Wert, der ein höheres Ammoniak-Mischungsverhältnis als der erste Wert aufweist, geändert wird, die Steuereinrichtung den entsprechend dem ersten Wert eingestellten ersten Luftüberschussverhältniswert auf einen zweiten Luftüberschusswert ändert, der kleiner als der erste Luftüberschussverhältniswert ist,
wobei, wenn der durch die Einstelleinrichtung eingestellte Wert des Ammoniak-Mischungsverhältnisses auf einen Wert von 65 % oder mehr eingestellt wird, der Wert des Luftüberschussverhältnisses auf 1,0 oder weniger eingestellt wird,
wobei, wenn der durch die Einstelleinrichtung eingestellte Wert des Ammoniak-Mischungsverhältnisses auf einen Wert von 15 % oder mehr und 25 % oder weniger eingestellt wird, die Steuereinrichtung den Wert des Luftüberschussverhältnisses so einstellt, dass er 1,0 bis 1,5 niedriger ist als der Wert des Luftüberschussverhältnisses während des Betriebs, bei dem nur Brennstofföls verwendet wird, und wobei eine erforderliche Luftmenge als ein Versorgungsluftdruck bestimmt wird.

2. Dieselmotor nach Anspruch 1, wobei das Luftüberschussverhältnis durch Einstellen eines Luftvolumens mit Hilfe von Einstellmitteln gesteuert wird, die in einem Abgas-Bypass eines Turboladers (64) vorgesehen sind.

3. Dieselmotor nach einem der Ansprüche 1 oder 2, wobei das Einleiten des Ammoniaks durch Einspritzen des Ammoniaks in eine Luftzufuhröffnung (20A) auf der Einlassseite der Brennkammer erfolgt.

4. Dieselmotor nach einem der Ansprüche 1 oder 2, wobei das Einleiten des Ammoniaks durch direkte Einspritzung des Ammoniaks in die Brennkammer (10A) erfolgt.

5. Dieselmotor nach einem der Ansprüche 1 bis 4, **gekennzeichnet durch**:
eine Durchflussmengen-Steuereinrichtung zum Steuern der Durchflussmenge des Brennstofföls bzw. der Durchflussmenge des Ammoniaks auf der Grundlage des von der Einstelleinrichtung eingestellten Ammoniak-Mischungsverhältnisses.
eine Durchflussberechnungseinrichtung zum Berechnen oder Erfassen des Durchflusses des Brennstofföls bzw. des von der Durchflusssteuereinrichtung eingestellten Ammoniakdurchflusses,
eine Mischungsverhältnis-Berechnungseinrichtung zum Berechnen des Mischungsverhältnisses von Ammoniak aus dem Berechnungsergebnis der Durchflussberechnungseinrichtung,
eine Luftüberschussverhältnisausgabeeinrichtung zum Ausgeben des Luftüberschussverhältniswertes, der entweder dem durch die Einstelleinrichtung eingestellten Ammoniak-Mischungsverhältniswert oder dem durch die Mischungsverhältnis-Berechnungseinrichtung erhaltenen Ammoniakmischungsverhältniswert entspricht,
eine Lastfaktorerfassungseinrichtung zur Erfassung eines Lastfaktors
eine Tabellenspeichereinrichtung mit mehreren Tabellen für jedes Luftüberschussverhältnis, die den von der Lasterfassungseinrichtung erfassten Lastfaktor und einen dem Lastfaktor entsprechenden Versorgungsluftdruckwert verknüpfen,
eine Versorgungsluftdruckbestimmungseinrichtung zum Bestimmen eines Versorgungsluftdrucks, der dem von der Lastfaktorerfassungseinrichtung erfassten Lastfaktor entspricht, unter Verwendung einer aus der Tabellenspeichereinrichtung ausgewählten Tabelle auf der Grundlage des von der Luftüberschussverhältnisausgabeeinrichtung ausgegebenen Luftüberschussverhältniswertes; und
eine Einrichtung zum Einstellen einer Luftmenge, die dem von der Einrichtung zur Bestimmung des Versorgungsluftdrucks ermittelten Versorgungsluftdruck entspricht.

6. Dieselmotor nach Anspruch 5, wobei die in der Tabellenspeichereinrichtung gespeicherte Tabelle eine gekrümmte Linie ist, die in der Lage ist, einen Versorgungsluftdruck für jedes Luftüberschussverhältnis gemäß einem beliebigen Lastfaktor zu bestimmen.

7. Dieselmotor nach Anspruch 5, wobei es sich bei der in der Tabellenspeichereinrichtung gespeicherten Tabelle um eine Nachschlagetabelle handelt, die in der Lage ist, den Versorgungsluftdruck gemäß einem vorgegebenen Lastfaktor für jedes Luftüberschussverhältnis zu bestimmen.

## Revendications

1. Moteur diesel comprenant : une chambre de combustion (10A) ; un dispositif de chargement de carburant pour charger un mazout servant de source d'allumage et ammoniac gazeux dans la chambre de combustion (10A), le dispositif de chargement de carburant formant un gaz prémélangé d'ammoniac dans la chambre de combustion (10A) grâce au mazout et à l'ammoniac gazeux introduits dans la chambre de combustion et effectuant une combustion mixte,
comprenant en outre un moyen de réglage capable de régler plusieurs valeurs différentes de rapport de mélange d'ammoniac, et
un moyen de contrôle pour ajuster une valeur de rapport d'excès d'air dans une somme totale du mazout et de l'ammoniac à introduire par le moyen de chargement sur la base de la valeur de rapport de mélange d'ammoniac definie par le moyen de réglage, dans lequel la valeur de rapport de mélange d'ammoniac definie par le moyen de réglage étant reglé entre 15 % et 85 % inclusivement,
dans lequel, lorsque de valeur de rapport de mélange d'ammoniac definie par le moyen de réglage est modifiée d'une première valeur à une deuxième valeur ayant un rapport de mélange d'ammoniac supérieur à la première valeur, le moyen de contrôle modifie la première valeur de rapport d'excès d'air ajustée en fonction de la première valeur pour obtenir une deuxième valeur de rapport d'excès d'air inférieure à la première valeur de rapport d'excès d'air,
dans lequel, lorsque la valeur de rapport de mélange de l'ammoniac definie par le moyen de réglage est reglée à une valeur de 65 % ou plus, la valeur de rapport d'excès d'air est ajustée à 1,0 ou moins,
dans lequel, lorsque la valeur de rapport de mélange de l'ammoniac définie par le moyen de réglage est reglée à une valeur de 15 % ou plus et de 25 % ou moins, le moyen de contrôle ajuste la valeur de rapport d'excès d'air pour qu'elle soit inférieure de 1,0 à 1,5 à la valeur de rapport d'excès d'air pendant le fonctionnement utilisant uniquement du mazout, et dans lequel une quantité d'air requise est déterminée comme une pression d'air d'alimentation.

2. Moteur diesel selon la revendication 1, dans lequel on règle le rapport d'excès d'air en ajustant un volume d'air par des moyens d'ajustement fournis dans une dérivation d'échappement d'un surcompresseur (64).

3. Moteur diesel selon l'une des revendications 1 ou 2, dans lequel le chargement de l'ammoniac est effectué en injectant l'ammoniac dans un orifice d'alimentation en air (20A) du côté d'entrée de chambre de combustion.

4. Moteur diesel selon l'une des revendications 1 ou 2, dans lequel le chargement de l'ammoniac est effectué par injection directe de l'ammoniac dans la chambre de combustion (10A).

5. Moteur diesel selon l'une des revendications 1 à 4, **caractérisé en ce qu'**il comprend :
un moyen de contrôle de débit pour contrôler le débit du mazout et le débit de l'ammoniac, respectivement, en fonction du rapport de mélange de l'ammoniac definie par le moyen de réglage.
un moyen de calcul de débit pour calculer ou détecter le débit du mazout et le débit d'ammoniac ajusté par le moyen de contrôle de débit, respectivement,
un moyen de calcul de rapport de mélange pour calculer le rapport de mélange de l'ammoniac à partir du résultat de calcul du moyen de calcul de débit,
un moyen d'émission de rapport d'excès d'air pour émettre la valeur de rapport d'excès d'air correspondant soit à la valeur de rapport de mélange d'ammoniac definie par le moyen de réglage, soit à la valeur de rapport de mélange d'ammoniac obtenue par le moyen de calcul de rapport de mélange,
un moyen de détection de facteur de charge pour détecter un facteur de charge
un moyen de stockage de tableau comportant plusieurs tableaux pour chaque rapport d'excès d'air associant le facteur de charge détecté par le moyen de détection de charge et une valeur de pression d'air d'alimentation correspondant au facteur de charge,
un moyen de détermination de pression d'air d'alimentation pour déterminer une pression d'air d'alimentation correspondant au facteur de charge détecté par le moyen de détection de facteur de charge à l'aide d'un tableau sélectionné dans le moyen de stockage de tableau sur la base de la valeur de rapport d'excès d'air émise par le moyen d'émission de rapport d'excès d'air ; et
un moyen d'ajustement d'une quantité d'air de manière à ce qu'elle corresponde à la pression d'air d'alimentation déterminée par le moyen de détermination de pression d'air d'alimentation.

6. Moteur diesel selon la revendication 5, dans lequel le tableau stocké dans le moyen de stockage de tableau est une ligne courbe capable de déterminer une pression d'air d'alimentation correspondant à un facteur de charge arbitraire pour chaque rapport d'excès d'air.

7. Moteur diesel selon la revendication 5, dans lequel la tableau stockée dans le moyen de stockage de tableau est une tableau de référence capable de déterminer la pression d'air d'alimentation correspondant à un facteur de charge prédéterminé pour chaque rapport d'excès d'air.
